# EUROPEAN PATENT APPLICATION

(11) **EP 4 646 928 A1**
(43) Date of publication of application: **12.11.2025**
(21) Application number: 25163136.2
(22) Date of filing: 12.03.2025
(51) Int. Cl.: A01M 7/00, B64D 1/18

(54) **A VEHICLE WITH A PRODUCT TANK AND A REFILLING SYSTEM**

(30) Priority: 10.05.2024 GB 202406670
(71) Applicant: Agco do Brasil Solucoes Agricolas LTDA, Sao Paulo, 14030-680 (BR)
(72) Inventor: Schenkel, Guilherme Mikael, 92420-000 Canoas (BR)
(74) Representative: AGCO Intellectual Property Department

(57) **Abstract**

A system is provided for refilling a ground-based vehicle. A ground-based refill source contains material to be provided to a product tank of the vehicle. An aircraft is used to deliver product from the refill source to the product tank.

## Description

### FIELD

Embodiments of the present disclosure relate generally to vehicles with product tanks, such as spraying systems (for example self-propelled boom sprayers), and to systems for refilling the product tanks of such vehicles.

### BACKGROUND

There are various vehicles which have a product tank including a product to be distributed over an area. One example is agricultural sprayers, which include a product tank containing the product (for example, but not limited to, herbicide, pesticide, fungicide, and/or fertilizer) to be delivered to the ground during the spraying operation. During application, the operator typically needs to refill the product tank every two hours or less, depending on the tank capacity and the application rate. In many cases, the product tank may only last one hour in the field.

The user then needs to refill the product tank before continuing the spraying operation. The operator typically needs to take the sprayer to a refill station, and in some cases this may be far away. In addition, the operator may need to close the spray boom to drive to the refill station, particularly if driving on public roads. Even if a local refill truck is provided near to the area that is being sprayed, this will still take time. Depending on where the refill station is located, it will typically take some time to refill the product tank.

This issue applies to any vehicle which is used to deliver product from a product tank to a particular location, and when the capacity of the product tank is insufficient for the requirements of the location.

U.S. Patent 11,235,874, "Automated Drone-Based Spraying System," granted February 1, 2022, discloses the use of unmanned aerial vehicles to perform spraying. However, there is still a need to dock the aerial vehicles to refill their payload reservoirs (or use multiple vehicles in sequence for each spraying operation).

There remains therefore a need to reduce the refilling time and to make the spraying function more efficient.

### BRIEF SUMMARY

According to examples in accordance with this disclosure, a system for refilling a ground-based vehicle includes an aircraft and a ground-based source containing product be provided to a product tank of the vehicle. The aircraft includes a connection to the ground-based source and a delivery outlet, wherein the delivery outlet is configured for coupling to the product tank to enable the product tank to be refilled from the ground-based source using the aircraft.

In this way, an aircraft is used to bring product to the vehicle, such as an agricultural vehicle for example a sprayer vehicle, for refilling the product tank from a refill tank. This reduces downtime and avoids the need for the vehicle to travel long distances (if at all), and it for example avoids the need to close the spraying boom in the case of a boom sprayer. In some implementations, it means the product tank can be refilled wherever the vehicle is located. In this way, it may even enable uninterrupted application by the vehicle while refilling takes place. The product tank can be refilled before the product in the product tank has been depleted.

The refilling can take place within a certain distance of the ground-based source, the distance corresponding to a length of tubing carrying the product. The length of the connection may be limited by the load that can be carried by the aircraft as well as safety issues, but this implementation can use an aircraft with a relatively low carrying capacity, and therefore a lower-cost, than a system that relies on the aircraft carrying all the product to be transferred. The ground-based source can be much larger than could be carried by such a low-cost aircraft. In particular, the refill source can store enough product for multiple refills of the product tank. The ground-based source can be replenished (from another product source, such as a larger ground-based storage tank, a tanker truck, a pile of particulate material, *etc*.) on a different schedule than the product tank is replenished. By using the aircraft to refill the product tank, there is flexibility in the location at which refilling can take place because the aircraft can fly between the ground-based source and the vehicle to be refilled.

In one implementation, the product is a liquid, and the aircraft comprises a pump for pumping between the connection to the ground-based source (e.g., a ground-based source outlet) and the delivery outlet. Thus, the aircraft implements the pumping.

In another implementation, the product is a liquid, and the ground-based source comprises a pump for pumping to the connection to the ground-based source. In this case, the aircraft does not need to carry the pump, and hence basically functions as a fluid coupling between the ground-based source and the product tank.

The aircraft may comprise an unmanned aerial vehicle, e.g., a drone. This reduces both labor and material cost (e.g., as compared to a helicopter).

This disclosure also provides a spraying system comprising a ground-based agricultural sprayer having a product tank and a spraying system for delivering product from the product tank to the ground, and the refilling system described above for refilling the product tank from the ground-based source. The ground-based source is remote from the agricultural sprayer.

The ground-based agricultural sprayer for example comprises a boom sprayer. It is for example a self-propelled boom sprayer.

This disclosure also provides a method for refilling a product tank of a vehicle. The method comprises flying an aircraft over the vehicle, the aircraft having a delivery outlet for delivering a product; and delivering a product from a ground-based source to the product tank via the delivery outlet of the aircraft.

The use of an aircraft to deliver product to the product tank during refilling enables refilling to take place at the location of the vehicle rather than at a refill station.

The vehicle is for example an agricultural sprayer and the vehicle is in an agricultural field during delivery of the product to the ground-based source.

Delivering the product may comprise extending a conduit from the aircraft to the product tank. This enables the aircraft to remain a safe height above the vehicle.

The method thus comprises flying a conduit connecting the ground-based source to the agricultural sprayer or other ground-based vehicle.

The ground-based source may itself comprise a vehicle-mounted tank, so that it can be driven to the proximity of the vehicle (e.g., to the edge of the field nearest the vehicle). This minimizes the distance (if any) the sprayer or other vehicle needs to travel before refilling. Alternatively, the ground-based source may be a fixed-location tank, a pile of particulate material, *etc.*

The method may comprise using a pump carried by the aircraft to pump between the ground-based source and the delivery outlet or using a ground-based pump to pump between the ground-based source and the aircraft.

### BRIEF DESCRIPTION OF THE DRAWINGS

Embodiments will now be described, by way of example only, with reference to the accompanying drawings, in which:
FIG. 1 shows a first example of a refilling system for a vehicle;
FIG. 2 shows in schematic form the configuration of FIG. 1, and including a ground-based source;
FIG. 3 shows the system components of the sprayer vehicle and a drone that relate to the refilling operation for the configuration of FIG. 2 and
FIG. 4 shows second possible system components of the vehicle and the drone that relate to the refilling operation for the configuration of FIG. 2.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods will become better understood from the following description, appended claims, and accompanying drawings. It should be understood that the figures are merely schematic and are not drawn to scale. It should also be understood that the same reference numerals are used throughout the figures to indicate the same or similar parts.

This disclosure provides a system for refilling a ground-based vehicle. A ground-based source comprises material to be provided to a product tank of the vehicle. An aircraft is used to deliver material from the ground-based source to the product tank.

The concept underlying the disclosure will be explained using one example in which the vehicle is an agricultural sprayer. However, the concept of refilling a product tank of a ground-based vehicle may be applied to other types of vehicle. It applies to any vehicle which is used to deliver product to a particular location and in which more product is needed at that general location than the storage capacity of the vehicle's product tank, so that the vehicle needs the product tank to be refilled while it remains at the same general location.

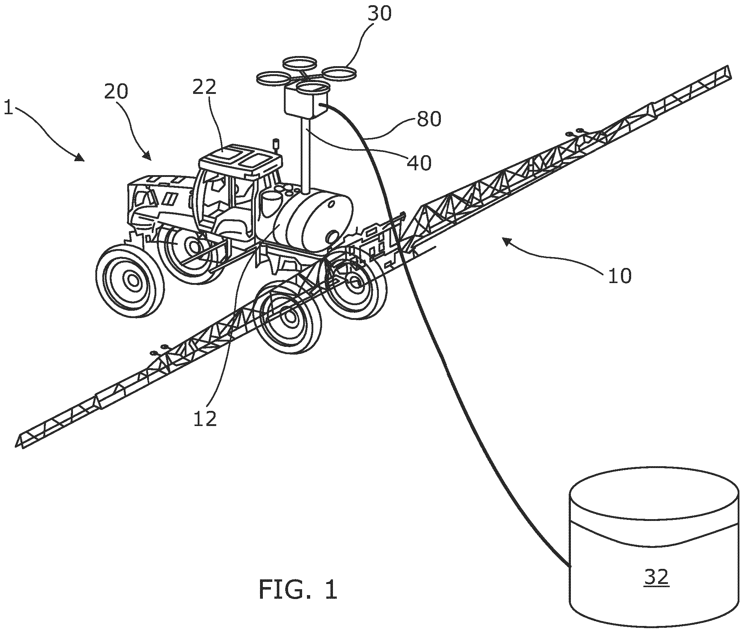

FIG. 1 shows an agricultural sprayer vehicle 1 in the form of a self-propelled boom sprayer comprising a spray boom 10 having a line of spray nozzles mounted behind a drive vehicle 20. The drive vehicle 20 has a cab 22 where an operator sits while controlling the spraying function. Note that the spray boom 10 may alternatively be mounted at the front of the drive vehicle 20. In other embodiments, the agricultural sprayer vehicle 1 is an autonomous vehicle without an on-board operator. A product tank 12 stores chemicals to be applied, and a delivery system is provided for delivering the chemicals to the nozzles.

FIG. 1 additionally shows a refilling system, and in particular shows a drone 30 (which is one example of an unmanned aerial aircraft). The drone 30 is part of the system for refilling the product tank of the sprayer vehicle 1.

A delivery outlet 40 carried by the drove 30 couples to the product tank 12 to enable the product tank to be refilled from a ground-based source 32 (*e.g.,* a tank).

The delivery outlet 40 may be a fixed conduit extending downward from the drone to the sprayer vehicle. Alternatively, the delivery outlet may be an extendible line which can be extended from the drone to the product tank. In some embodiments, the delivery outlet 40 may connect to a conduit extending upward from the product tank 12. This enables the drone to remain a safe height above the sprayer vehicle 1.

However, in another example, the product tank 12 may have a landing pad on which the drone can land to perform the refilling operation. In this way, the drone does not need to remain in flight while refilling takes place. Thus, the drone may land directly over the filling cap of the product tank 12. The delivery outlet 40 is then simply a fluid coupling between the drone and the product tank.

The product tank 12 for example has a closable cap, and it may be opened remotely (from the cab) by the operator of the spray vehicle 1, by a remote operator, or by a computer control system. This enables connection to be made to the delivery outlet 40.

The drone 30 is thus used to bring product to the sprayer vehicle 1 for refilling the product tank from the ground-based source 32. This reduces downtime and avoids the need for the sprayer vehicle 1 to travel to a refilling station. It avoids the need to close or fold the spray boom 10 before refilling. Thus, the product tank 12 can be refilled wherever the sprayer vehicle is located, and in some cases, without interrupting spraying while refilling takes place.

In this example, there is an external fluid connection 80 between the drone 30 and the ground-based source 32. In this case, the refilling can take place within a certain distance of the ground-based source 32, corresponding to the length of the fluid connection 80. This length is limited by the load (*i.e.,* the fluid connection 80 when full of product) that can be carried by the drone 30. There are various commercially available drones with 500 kg payload capacity or more. This enables the product tank 12 to be fully or partially refilled and enables the ground-based source to be replenished (*e*.*g*., by a tanker truck, *etc.*) before the product in the product tank has been depleted. Thus, spraying can be continuous, even if the product tank 12 needs replenishing multiple times. By coupling the ground-based source 32 with the drone 30, there is flexibility in the location at which refilling can take place. The product tank 12 can for example be filled in one operation, without the need for the drone 30 to fly back and forth to the sprayer vehicle 1.

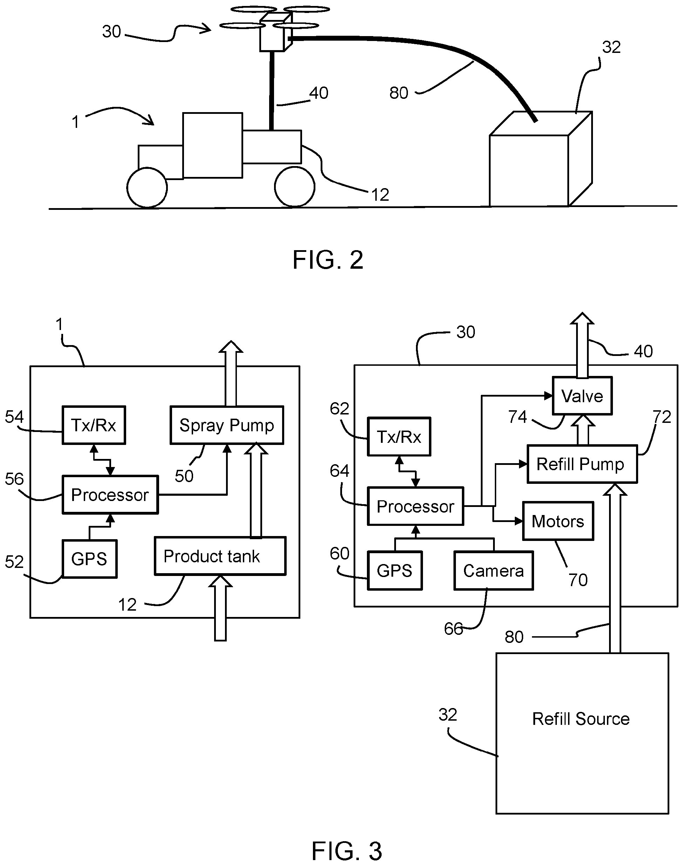

FIG. 2 shows in schematic form the configuration of FIG. 1.

FIG. 3 shows the system components of the sprayer vehicle 1 and the drone 30 which relate to the refilling operation, for the configuration of FIG. 2. Features of the drone 30 that are not relevant to the refilling operation are not shown, such as the battery, accelerometers, and gyroscopes, *etc.* The wide arrows represent flow paths for liquid product and the line arrows represent electrical or signal connections.

The sprayer vehicle 1 comprises the product tank 12 and a spray pump 50 for delivering flow to the nozzles of the boom 10.

By way of example, sprayers may have a product tank with a capacity of 3,000 liters, 6,000 liters, or any other capacity. Typical application flow rates can vary from 30 liters per hectare to 200 liters per hectare, depending on the product and its concentration. Typically, the product tank in such an operating condition will last in the range of 2 to 6 hours, depending on tank capacity and flow rate (which is influenced by application rate (volume or mass of product per unit of field area), vehicle speed, product type, and other factors).

The frequency with which refill operations need to be conducted will depend on the capacity of the refill tank and the rate of application of product. For example, a refill may be required approximately every hour.

The sprayer vehicle 1 has a position tracking system 52 (e.g. GPS) and a communications system 54. A processor 56 controls the communications system 54 and processes the position information from the position tracking system 52. The sprayer vehicle 1 can broadcast its location and speed so that the drone 30 can be automatically piloted to the location of the sprayer vehicle 1.

The drone 30 also has a positioning system 60 and communications system 62 controlled by a processor 64. The drone may include a camera system 66 or other sensors which can be used to determine relative alignment between the drone 30 and the sprayer vehicle 1 to assist a docking function in which the drone 30 docks or connects to the sprayer vehicle 1 to enable the refilling operation to take place.

The drone 30 for example communicates with the sprayer 1, reporting its GPS position and work speed using the telemetry of the sprayer 1. The sprayer vehicle 1 may have a landing pad on which the drone 30 can land to perform the refilling operation. Alternatively, the drone 30 may perform the refilling operation while flying.

The drone has motors 70 for driving the propellors.

In this example, the drone comprises a refill pump 72 and an outlet valve 74. The refilling of the product tank 12 is achieved by pumping from the ground-based source 32 via a fluid connection 80 (*i.e.,* a connection to an outlet of the ground-based source 32) and via an outlet valve 74, to the delivery outlet 40. The drone 30 in this case functions as a fluid connector (and pump in this case) between the remote refill tank 32 and the sprayer vehicle 1.

In one example, the product tank 12 has a cap which is opened to receive the delivery outlet 40 in the form of a conduit that projects downwardly from the drone 30.

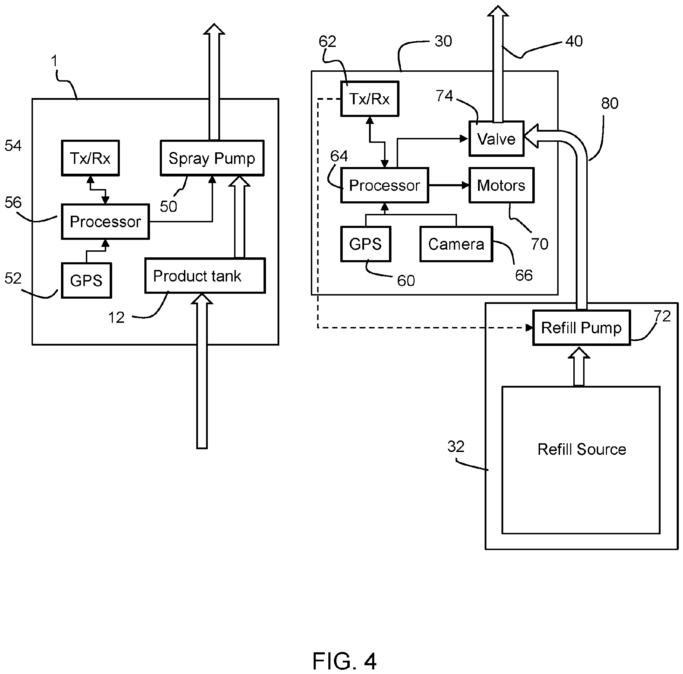

FIG. 4 shows second possible system components of the sprayer vehicle 1 and the drone 30 which relate to the refilling operation, for the configuration of FIG. 2.

The sprayer vehicle 1 has the same components as in FIG. 3.

The drone 30 again has the positioning system 60 and communications system 62 controlled by a processor 64, as well as the camera system 66 or other sensors for docking.

The drone 30 thus has the same components as in FIG. 3, apart from the refill pump 72, which is at the location of (and may be considered part of) the ground-based source 32. The communication system 62 is used to send command signals to control the pumping by the refill pump 72.

The refilling of the product tank 12 is again achieved by pumping from the remote refill tank 32 to the delivery outlet 40 via the drone 30. The drone 30 in this case functions only as a fluid connector between the ground-based source 32 and the sprayer vehicle 1, and the pumping is remote to the drone 30.

The ground-based source 32 may comprise a vehicle-mounted tank (*e*.*g*., a tanker truck), so that it can be driven to the proximity of the sprayer 1 (*e.g.,* to the edge of the field nearest the sprayer 1). This minimizes the distance (if any) the sprayer 1 needs to travel before refilling. Alternatively, the ground-based source 32 may be a fixed-location tank (*e*.*g*., serviced by a tanker truck).

In examples above, a liquid product is delivered from a ground-based source 32 to the product tank via the delivery outlet of the drone 30. There is a fluid connection 80 to the ground-based source 32 (*e.g.,* to the outlet of a tank) which extends between the drone 30 the ground-based source 32.

The examples above make use of a drone 30. More generally, any unmanned aerial vehicle may be used. Even more generally, the concept may be implemented using any aircraft such as a helicopter.

Though the examples describe a liquid product, the concept may be implemented to refill a solid, such as a particulate material. In such embodiments, the solid need not be stored in a tank, but may instead be stored in a bin, a pile, *etc*. Other adjustments may be made to transfer solid material instead of liquid. Transfer systems for such solid materials may include a blower instead of a pump, for example.

Within the scope of this disclosure, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A system for refilling a ground-based vehicle, the system comprising:
a ground-based source (32) containing product to be provided to a product tank of the vehicle; and
an aircraft (30), comprising:
a connection (80) to the ground-based source (32); and
a delivery outlet (40), wherein the delivery outlet is for coupling to the product tank to enable the product tank to be refilled from the ground-based source (32) using the aircraft.

2. The system of claim 1, wherein the ground-based source (32) comprises a tank.

3. The system of claim 2, wherein the product is a liquid and the aircraft comprises a pump (72) for pumping between the connection (80) to the ground-based source (32) and the delivery outlet (40).

4. The system of claim 2, wherein the product is a liquid and the ground-based source (32) comprises a pump (72) for pumping to the fluid connection (80).

5. The system of any one of claims 1 to 4, wherein the aircraft comprises an unmanned aerial vehicle.

6. A spraying system comprising:
the refilling system of any one of claims 1 to 6 for refilling the product tank from the ground-based source (32); and
a ground-based agricultural sprayer (1) comprising a product tank (12) and a spraying system (10, 50) for delivering product from the product tank to the ground.

7. The system of claim 6, wherein the ground-based agricultural sprayer (1) comprises a boom carrying a plurality of spray nozzles.

8. A method for refilling a product tank of a ground-based vehicle (1), the method comprising:
flying an aircraft (30) over the vehicle (1), the aircraft (30) having a delivery outlet (40) for delivering a product; and
delivering a product from a ground-based source (32) to the product tank (12) via the delivery outlet (40) of the aircraft (30).

9. The method of claim 8, wherein the vehicle (1) is an agricultural sprayer and the vehicle (1) is in an agricultural field during delivery of product to the product tank (12).

10. The method of claim 8 or claim 9, wherein delivering a product comprises extending a product line from the aircraft (30) to the product tank (12).

11. The method of any one of claims 8 to 10, wherein the method comprises coupling the aircraft (30) to the ground-based source (32) using a product connection (80).

12. The method of claim 11, wherein the ground-based source (32) comprises a vehicle-mounted or fixed-location tank.

13. The method of claim 11, wherein the ground-based source (32) comprises a pile of particulate material.

14. The method of claim 11 or 12, wherein the product comprises a liquid and the method comprises using a pump (72) carried by the aircraft to pump between the ground-based source (32) and the delivery outlet.

15. The method of any one of claims 8 to 14, wherein flying an aircraft comprises flying an unmanned aerial vehicle.
